# EUROPEAN PATENT APPLICATION

(11) **EP 1 641 145 A1**
(43) Date of publication of application: **29.03.2006**
(21) Application number: 04255919.5
(22) Date of filing: 28.09.2004
(51) Int. Cl.: H04B 7/08

(54) **Improved system for radio reception**

(71) Applicant: MATSUSHITA ELECTRIC INDUSTRIAL CO., LTD., Kadoma-shi, Osaka-fu (JP)
(72) Inventor: Harris, Rober Michael, Panasonic Mobile Communic., Wokingham Berkshire RG40 2AQ (GB)
(74) Representative: Haley, Stephen

(57) **Abstract**

A system for improving the consistency of a reception of electromagnetic radiation is provided. The system comprising: at least two antennas each having a predetermined spatial response; means for receiving incoming electro-magnetic signals from each of the antennas; means for analysing the incoming signals to ascertain the Doppler spread component of the incoming signal in each direction; means for combining the responses from each of the antennas to result in an outgoing signal that appears to come from a single, virtual antenna; means for detecting the optimal direction of arrival of the signal; means for modifying the virtual antenna based upon the detected Doppler spread in order to optimise the outgoing signal.

## Description

The present invention relates to a system for improving the consistency of reception of electromagnetic radiation and, in particular, to the reception of radio and more particularly to the Digital Radio Mondiale (DRM) transmissions.

In the past AM radio broadcasts have been transmitted over long distances by relying on reflection of the signal from the ionosphere. This is a very effective method of transmitting the radio waves over very long ranges enabling broadcasters to reach large regions with sparse populations or with other geographic or political impediments to terrestrial broadcasting infra-structures, and, in particular, to positioning of antennas. However, atmospheric irregularities can degrade the quality of the signal and result in sporadic "drop-outs" wherein the radio signal fades or disappears completely.

In order to tackle these problems the long standing AM broadcast services are being replaced with digital modulation and coding that is intended to provide a similar or better standard of service. One example of such a service is Digital Radio Mondiale (DRM). DRM is broadcast in the bands below 30 MHz, principally in the traditional "short-wave" bands (typically 6 MHz to 21 MHz) and the aim is to reach very distant audiences.

There are a number of factors that affect the reception of a radio signal at a given location. One feature of radio reception in an area of complex topology, such as a city, is multipath. There are two types of multipath; the first results from a single receiver receiving signals from a number of different transmitters and the second is the result of reflections of a single transmission off surrounding buildings. Each of these reflections then results in a separate signal at the receiver. Multipath is not addressed by the present application as, in the case of the second type of multipath, the direction of arrival of the different signals is so similar to the direct signal that it is frequently not possible to resolve the various signals.

Another problem associated with transmission of signals occurs when the surface from which it is desired to reflect a signal is moving. This introduces a Doppler shift in the reflected signal. The direction and magnitude of the Doppler shift depends on the speed at which the reflecting surface is moving and also whether the reflector is moving towards or away from the incident signal.

In order to overcome the problems associated with multipath there have been various schemes proposed. However, the most important aspect would appear to be addressing the fluctuation in strength of the original line of sight of propagation the signal as any variety in this is likely to result in changes in relative signal strengths of different signals and also, occasionally to drop-outs which occur when all signals drop below the noise level. In order to deal with these problems at source the cause of the drop-outs, stemming from atmosphere conditions have been studied.

There is known to be a strong correlation between the presence and extent of Mid-Latitude Troughs and the frequency of drop-outs in radio reception. An experimental indicator of the extent of a Mid-Latitude Trough is found by measuring the Doppler spread component of the signal incoming from a given transmitter. Mid-Latitude Troughs evolve over a time scale that is sufficient for the transceiver conditions to be changed in order to give precedence to those signals unaffected by the Mid-Latitude Trough, i.e. those with a small Doppler shift component. The term Mid-Latitude Trough is, unfortunately used in two substantially unrelated fields namely meteorology and atmospheric physics. The Meteorological phenomenon occurs in the Northern hemisphere and concerns layer height in the lower atmosphere where it influences the weather on the ground. This is not relevant here. The second use of the phrase Mid-Latitude Trough is by atmospheric physicists with reference to a trough in the electron density profile. It is this latter use of the term that is of relevance to the present application.

The present invention seeks to overcome the problems associated with atmospheric disturbances by a provision of a system for improving the consistency of a reception of radio waves, the system comprising:
at least two antennas each having a predetermined spatial response;
means for receiving incoming electro-magnetic signals from each of the antennas;
means for analysing the incoming signals to ascertain the Doppler spread component of the incoming signal in each direction;
means for combining the responses from each of the antennas to result in an outgoing signal that appears to come from a single, virtual antenna;
means for detecting the optimal direction of arrival of the signal;
means for modifying the virtual antenna based upon the detected Doppler spread in order to optimise the outgoing signal.

Preferably the analysis means is an algorithm which may be biassed to promote signal arriving on the normal Great Circle bearing.

Preferably the receiver is a radio frequency receiver for receiving DRM radio signals.

Preferably the antennas are embedded in the constituent parts of a system designed to render incoming electro-magnetic signals as sound.

The threshold above which Doppler spread components are construed to be unacceptably high may be predetermined or may be varied dynamically.

Preferably, the antennas form a phased array.

The present invention will now be described with reference to the accompanying drawings in which:
Figure 1 shows the irregularities in the side walls of a Mid Latitude Trough stylised as elemental reflecting surfaces;
Figure 2 shows schematically a cross section through a Mid-Latitude Trough;
Figure 3 shows positive and negative Doppler shifts resulting from travelling ionospheric irregularities;
Figure 4 shows schematically a three dimensional plot of a Mid Latitude Trough;
Figure 5 shows fluctuations in broadcast reception quality over time;
Figure 6 is a diagrammatic representation of multi-path and Doppler line-of-sight communications;
Figure 7 shows coherent Doppler shift due to Atmospheric Gravity Wave motion in the ionospheric reflecting layer;
Figure 8 shows the azimuthal discrimination if an adaptive antenna in a system according to the present invention;
Figure 9 is a representation of anomalous Doppler-spreading from a Mid Latitude Trough;
Figures 10 to 12 show examples of the present invention incorporated into Domestic *hi-fi* systems; and
Figure 13A to F shows how components provided by different manufacturers can be used to create a system according to the present invention.

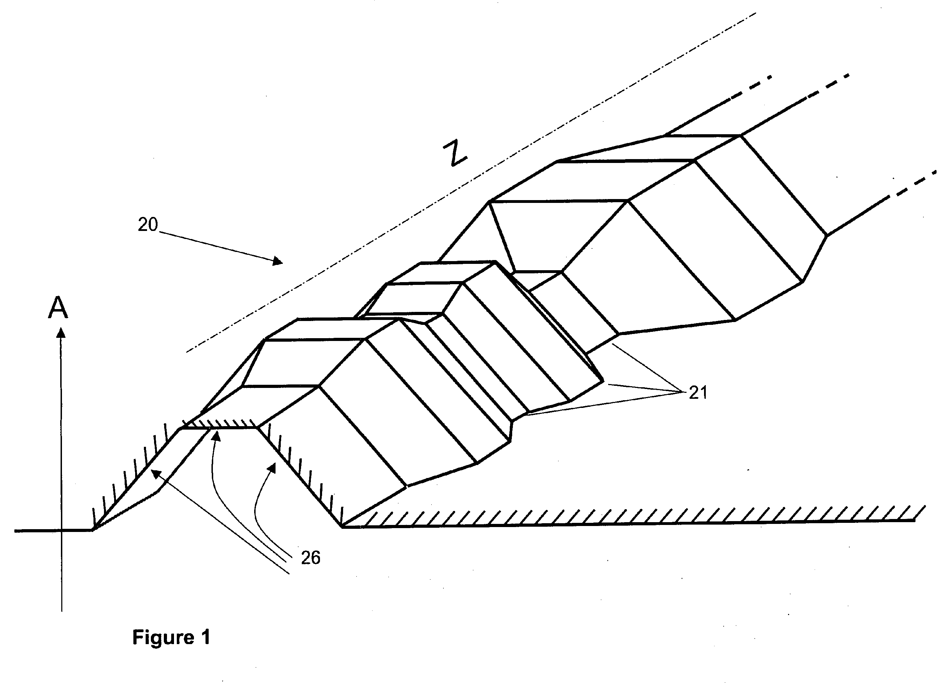

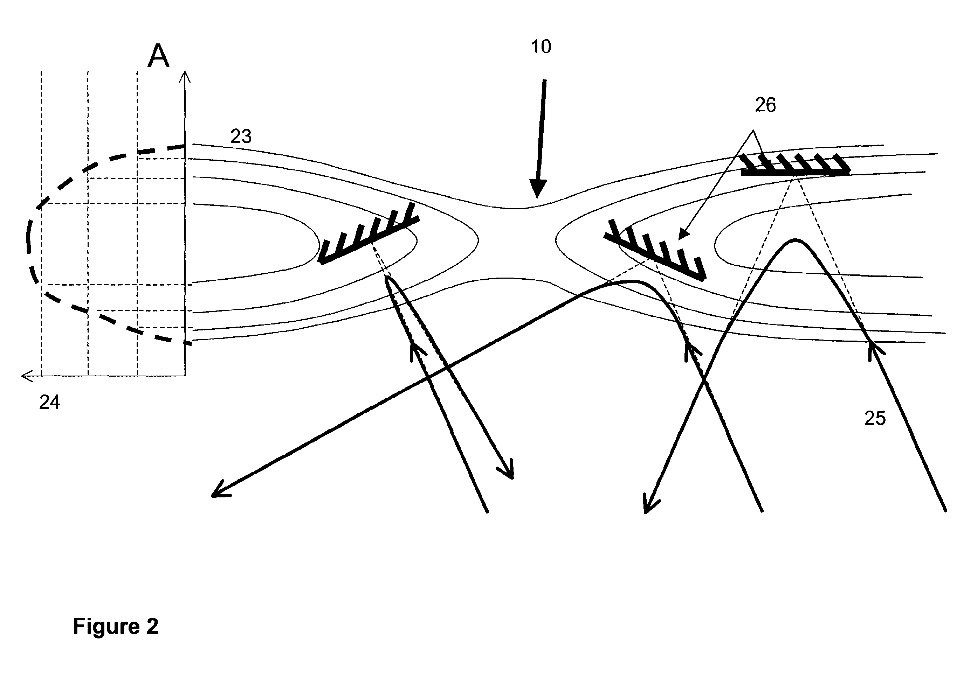

Figure 1 shows schematically a Mid Latitude Trough 10. A Mid Latitude Trough 10 is a form of atmospheric disturbance. Generally, the ionosphere provides a smooth surface from which radio waves can be virtually reflected in order to cover the large geographical ranges required for this type of broadcast. In fact the radio waves penetrate the atmosphere and their direction changes as a result of refraction as shown in Figure 2. However the resulting direction change is the same as that which would occur if they had been reflected from a mirror above the level of the ionosphere. This is shown schematically in Figure 2 wherein density contours 23 and the electron density 24 as a function of altitude A have been superposed. An incoming signal 25 is shown to refract as a result of the physical characteristics of the Mid Latitude Trough 10, however the refraction can be visualised as a reflection from a virtual mirror 26.

However, if a Mid Latitude Trough is present then the smooth reflecting surface is disturbed and the side walls of the trough may be considered as a series of reflecting surfaces at a range of different angles. These features can be divided into the gross slope of the side walls 20 and the inner corrugations 21 which are fluctuations along the axis Z of the Mid Latitude Trough 10. The inner corrugations 21 are secondary and may be ignored in certain cases. The present invention depends on the direction of arrival of signals and therefore the gross slope is the most important feature as it directly affects the direction of arrival of the signals at an antenna.

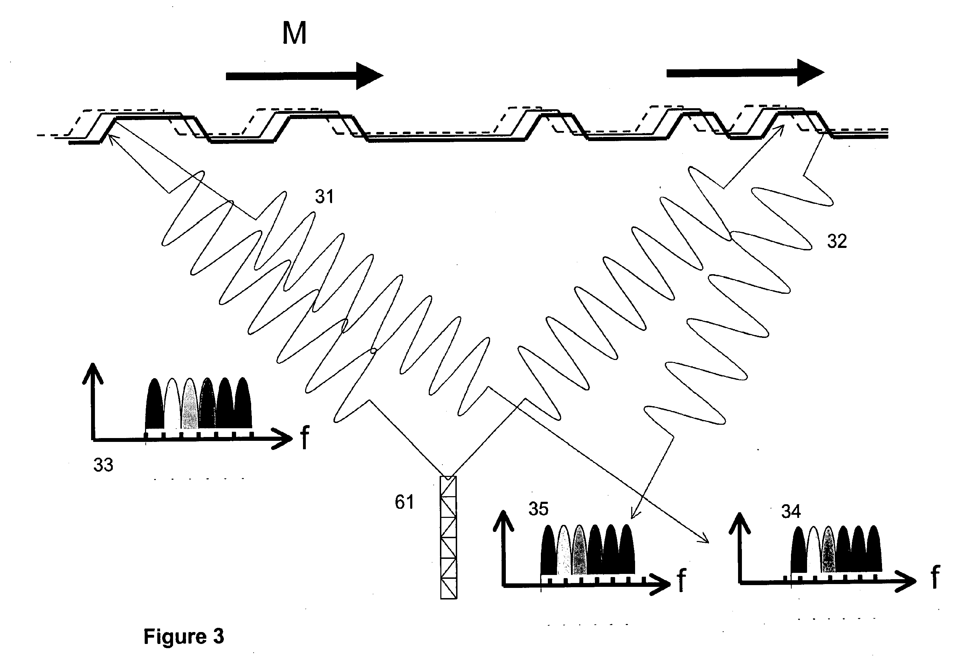

Figure 3 shows a cross section of the gross slope of a series of ionospheric irregularities which are moving in the direction M. The waves 31 reflected from the leading edge of a disturbance undergo positive Doppler shift as the reflecting surface from which they are reflected is travelling towards the waves that are reflected. In contrast, waves 32 reflected from the trailing edge of the irregularities undergo negative Doppler shift as the reflecting surface is travelling away from the waves that are reflected. The resulting spectra are shown in the inset figures 33 to 35. The outbound signal has a normal spectrum shown in 33, the positive shift of the waves 31 is shown in 34 and the negative shift in 35. This, in turn, causes the radio waves to be reflected at different angles from those expected in calm conditions when no Mid Latitude Troughs are present.

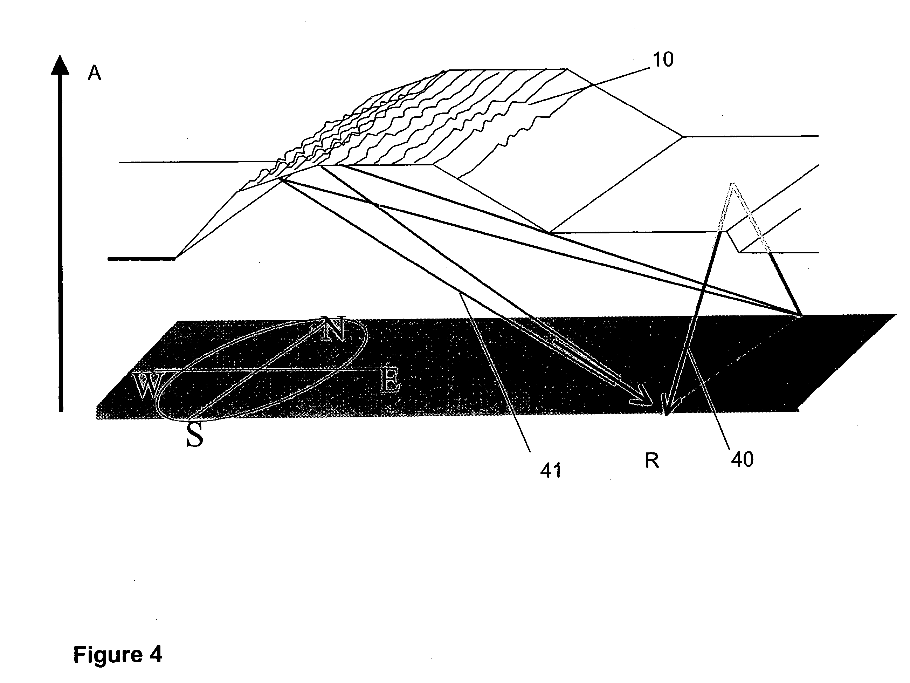

Figure 4 shows a plot of the spatial distribution of a Mid Latitude Trough 10 as a function of altitude A and the impact of the Mid Latitude Trough 10 on reception at a receiver R. The receiver R can receive transmission from a smooth part of the ionosphere, along path 40. However, signals arriving along path 41 (from the North West in this example) are disrupted as the result of the presence of a Mid Latitude Trough. Mid Latitude Troughs change in that both strength (and therefore angle of virtual reflecting surface) and position over time and therefore any system designed to overcome problems caused by Mid Latitude Trough must be able to respond to time dependent criteria.

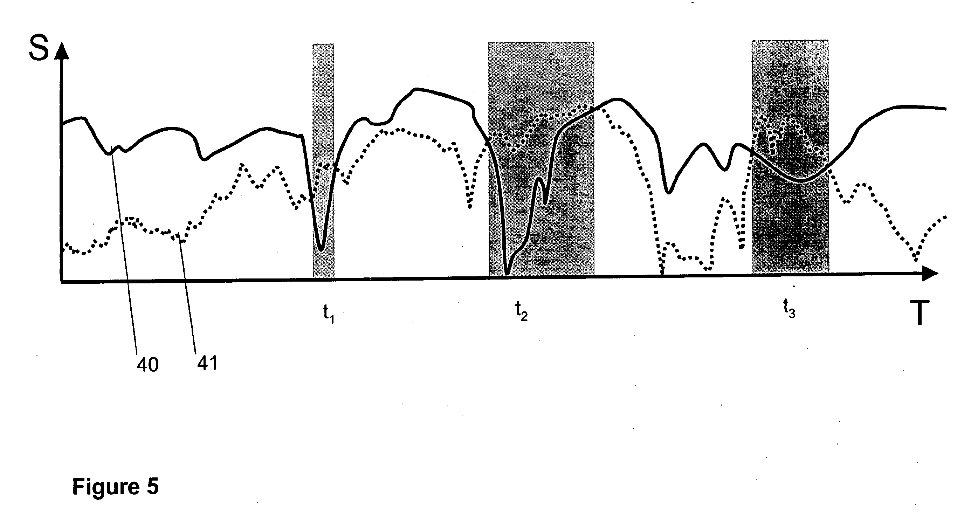

Figure 5 is a diagrammatic representation of the variation of signal strength S at the receiver over time T. The signal from path 40 is shown by the solid line and the signal from path 11 is shown by the dotted line. Whenever the strength of the signal arriving along path 40 dips below the strength of the signal from path 41 the quality of radio reception at the receiver A will be adversely effected. At time t₁ the reception will be impaired and at t₂ and t₃ a drop-out is likely to occur and no signal will be received. The difference between these two circumstances depends on the length of time for which the signal strength of the signal arriving on path 40 dips below that arriving on path 41.

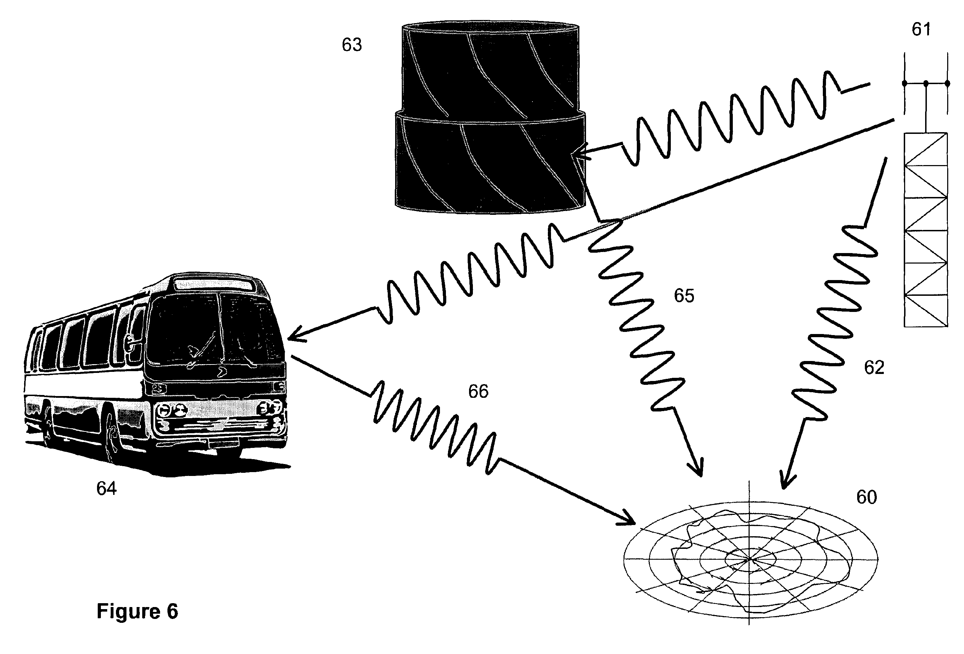

Figure 6 shows other sources of Doppler shifting in radio waves. There are two additional sources of Doppler shift illustrated in this Figure, namely Multi-path and Doppler shift resulting from the movement of a reflector. Multi-path arises in circumstances where there are a number of different routes that the waves can take between the source and the receiver. Under ideal circumstances the antenna 60, shown diagrammatically in terms of the spatial distribution of its gain, receives waves directly from source 61. This path is represented by 62 on Figure 6. If the antenna 60 is too far from the source 61 to have direct line-of-sight path then the direct path 62 will, in fact, include an ionospheric reflection. In addition to the direct path 62 the waves can be reflected from ground based static 63 or moving 64 reflectors. The waves 65 reflected by the static reflector will have a longer path length than those arriving by the direct path 62 and they will therefore arrive slightly later than the direct wave and also theywill, under normal circumstances, be less strong than the direct waves. In addition to these factors the waves 66 reflected from a moving object 64 will have a systemic Doppler shift resulting from the movement of the reflector itself. The paths of the waves that travel directly, via a static reflector and via a moving reflector result in different directions of arrival of the waves at the antenna 60.

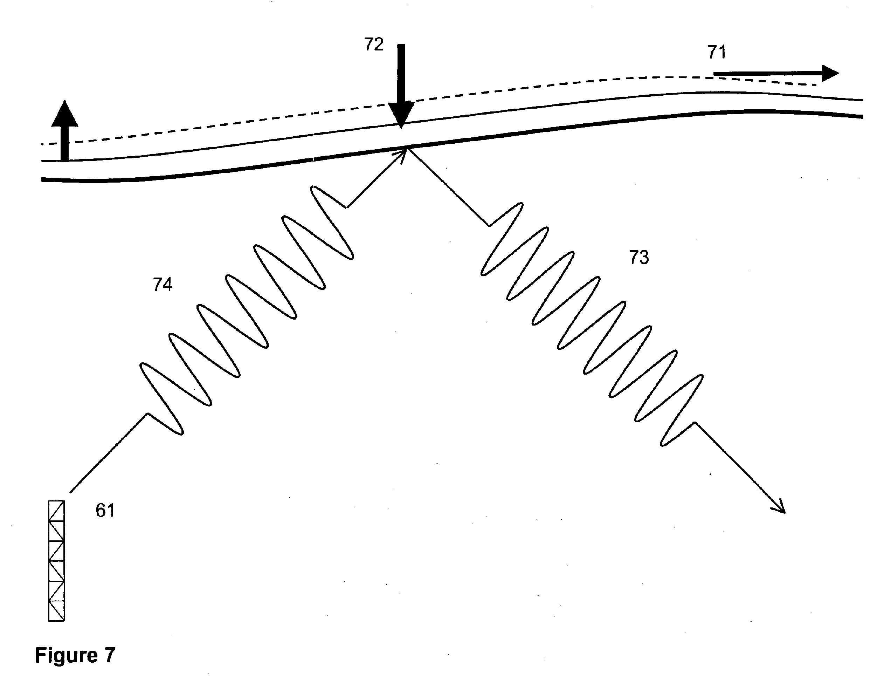

Figure 7 shows an additional contribution to the Doppler component of waves received by an antenna. All waves reflected by the ionosphere will undergo a time varying coherent Doppler shift due to Atmospheric Gravity Wave motion 71 in the ionospheric reflecting layer. This motion is much less violent than that associated with the Mid Latitude Trough. The Doppler shift under these circumstances results in a systemic shift. The lowering of the ionospheric reflecting layer at point 72 results in the reflected waves 73 having a positive Doppler shift in comparison with the incident signal 74.

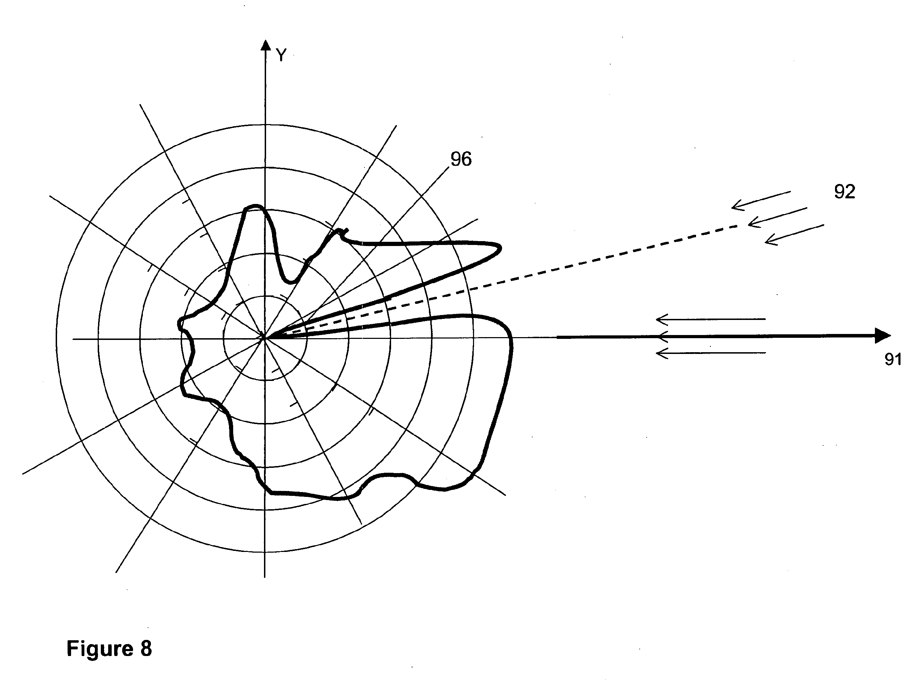

Antennas have an intrinsic azimuthal response pattern and this can be utilised and manipulated in order to compensate for the differing signal strength of signals coming from different directions. In particular, there is at least one direction from which no waves will be received. This direction is similar to a blind spot and is referred to as the antenna null. As the magnitude of the Doppler spread component in a given direction is strongly correlated with the extent of the atmospheric disturbance experienced by waves arriving from that direction then a measure of the Doppler spread component allows waves from certain directions to be blocked by manipulating the direction of the minimum response point of the antenna. A special auxiliary DSP will detect the Doppler-spread component in the composite antenna signal and minimise it by means of an algorithm that automatically steers an antenna null in its direction of arrival as shown in Figure 8. The spatial distribution of the antenna gain is shown on a radial plot. The further along the axis Y the higher the antenna gain. At the same time, it will favour those waves arriving from the normal Great-Circle bearing 91.

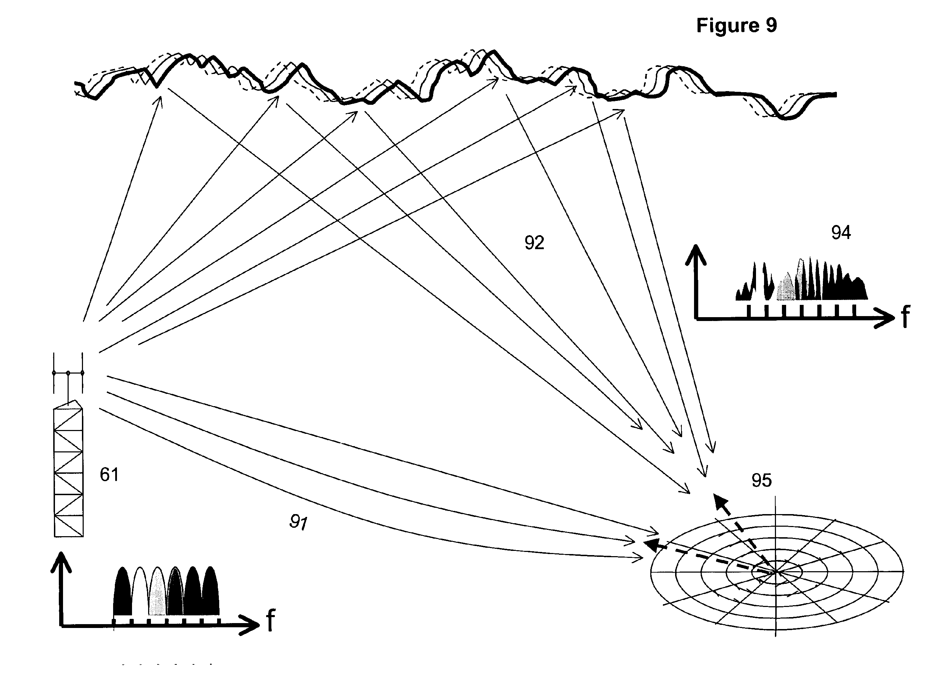

Figure 9 shows a semi-plan view of anomalous Doppler-spreading from a Mid-Latitude trough. The antenna 90 can receive, from a source such as a transmitter 61, normal sky waves on the Great Circle bearing 91 or waves 92 that have been subject to ionospheric disturbance. The effect of the spectrum is shown diagrammatically on the inset sections 93, 94 for the normal sky waves and disrupted waves, respectively. As the waves 92 have been severely disturbed the direction 95 from which these waves arrive is a bad direction of arrival and therefore the null 96 of the antenna 90 is steered such that the waves 91 are received in preference to waves 92.

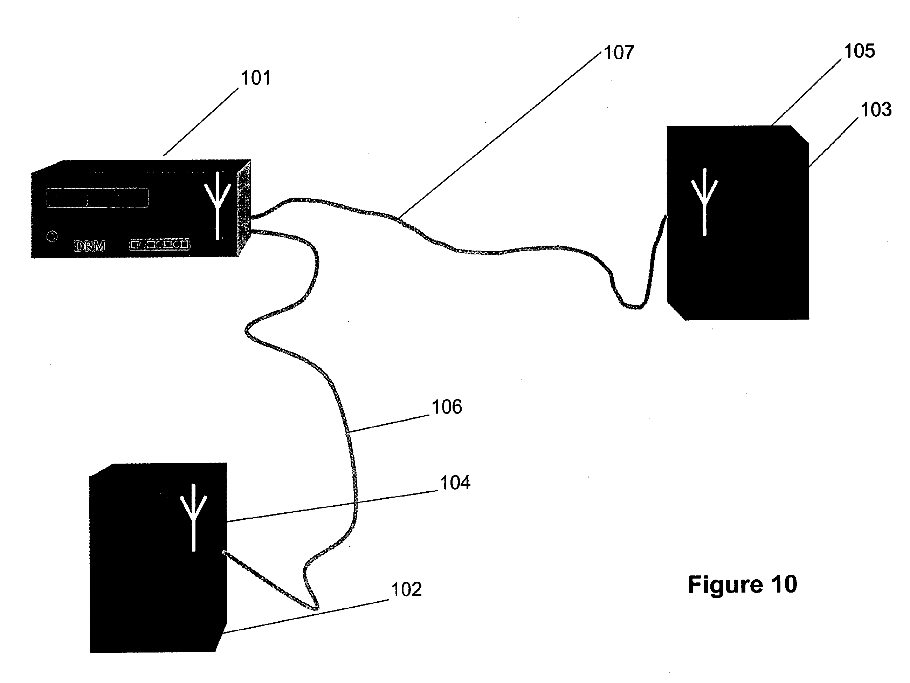

In order to steer a null electronically, at least two antenna elements are required, and the accuracy with which the steering can be performed increases with increasing separation of the two antennas. In order to steer a null electronically the aperture of the antenna array needs to be comparable with the radio wavelength. A separation of 2 m between a two-element array is expected to give reasonable results at 16 MHz, and that is commensurate with typical domestic *hi-fi* configurations. Such a separation can be achieved if short, electrically active antennas are embedded in the loudspeaker units of a domestic *hi-fi* system as shown schematically in Figures 10 to 12. Where similarities exist between these systems like reference numerals will be used.

Figure 10 shows one example of an antenna array 100 comprising a DRM radio and audio unit 101 and two loudspeaker units 102, 103 containing DRM active antenna units 104, 105 respectively. The DRM radio 101 has, incorporated within it, an active high frequency antenna. The DRM radio 101 is attached to the loudspeaker units 102, 103 by loudspeaker wires 106, 107 that carry the DRM signal back to the DRM radio unit 101. The predetermined profiles of the individual antenna elements are combined, with appropriate weightings and/or phase shifts, to create a single virtual antenna with a known spatial response. This response includes at least one virtual null point and it is this point that is "steered" in order to optimise the broadcast quality. The null is steered by the DSP by altering the phases of the various antennas in the system to give a virtual change in the array.

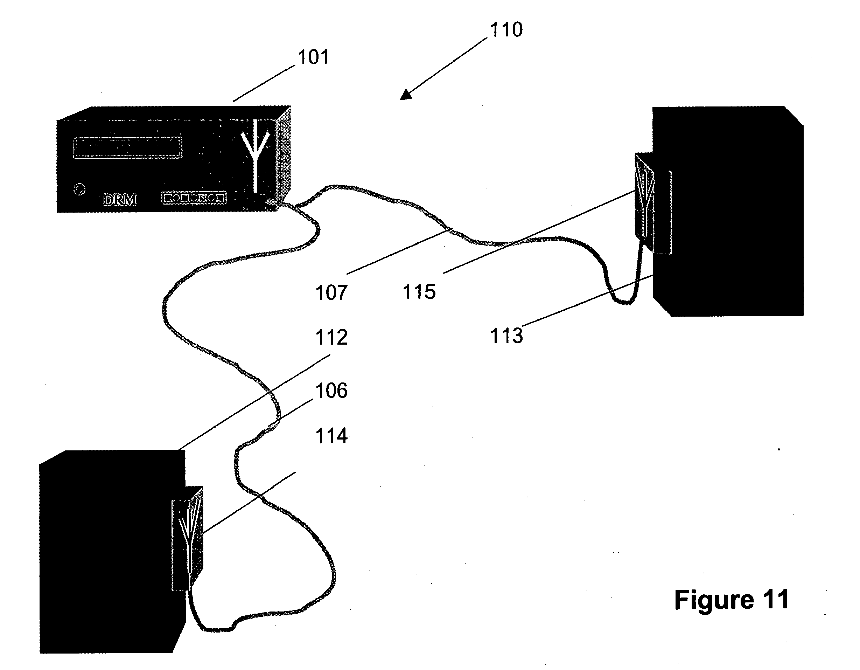

Figure 11 shows an example of the present invention retro-fitted onto an existing system 110. The DRM radio 101 and loudspeaker wires 106, 107 are similar to those used in the previous example but in this case the DRM active antenna units are appliqué units 114, 115 and have been retro-fitted to the loudspeakers 112, 113 which were not originally manufactured to have the capabilities of the DRM active antenna appliqué units 114, 115.

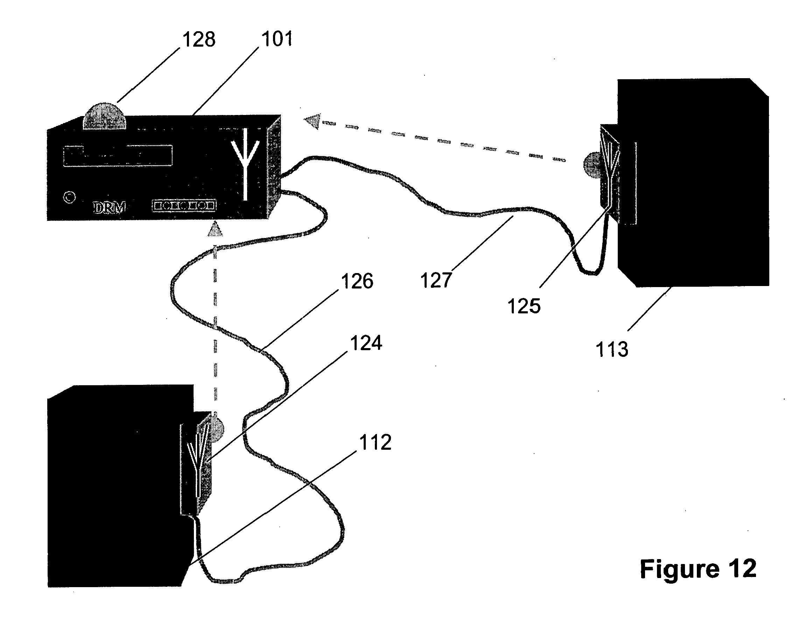

Figure 12 shows a further retro-fitted example. In this case the loudspeaker cables 126, 127 are not appropriate for carrying the DRM signal back to the DRM radio unit 101. Therefore the DRM active antenna appliqué units 124, 125 include wireless transmitters that send this information back to the DRM radio unit 101. This overcomes problems with loudspeaker cables that are not capable of transmitting the information but it does constrain the positioning of the loudspeakers 112, 113 to a line-of-sight position to the DRM radio unit 101. The DRM radio unit 101 is provided with a wireless sensor 128 to pick up the signals from the DRM active antenna appliqué units 124, 125. The signals used can be in the infra-red, ultra-sound or microwave band.

At the height of a disturbance in radio reception it sometimes becomes difficult to determine the location of the disturbance and therefore the direction of arrival that should be excluded. In order to maintain the efficiency of the nulling operation, the best estimate of the instantaneous direction of arrival is required in the real time. Kalman filtering will be incorporated in the auxiliary DSP software to track the past changes in the direction of arrival from measurements and predict it when measurements are unavailable or unreliable. Furthermore, the system can discriminate against more than one direction of arrival and therefore the system can place a null or minimum in more than one direction of arrival, provided there are sufficient antennas in the system.

In all cases the approximately 180° directional conjugate of the required minimum is admissible (directional ambiguity) between any pair of antenna elements because 180° directional ambiguity can arise in simple phased arrays.

In addition to the essential facility for automatic placing of a null or nulls in the directions of unwanted radio transmissions the DSP in the system of the present invention can be configured to discriminate against locally generated electro-magnetic noise, eg a PC on the floor between two of the active antennas. Another source of radio interference that is increasingly important is that from indoor Powerline Transmission (PLT) and Powerline Communications (PLC) systems in which the internal circuitry is used for transmitting data. For instance, merely summing the weighted outputs of two magnetic-loop elements eliminates vertically polarised noise generated at any point in between.

The threshold above which Doppler spread components are construed to be unacceptably high may be predetermined or may be varied dynamically.

When the system of the present invention is installed in a domestic *hi-fi* system, provision will be made for connecting two or more detachable loudspeakers corresponding to the left and right stereo channels, and possibly other loudspeakers for low-frequency audio ("sub-woofer"), rear loudspeakers for home-cinema or surround-sound. The left and right loudspeakers of the traditional *hi-fi* set-up, are customarily placed some distance either side of the central unit (the "radio").

Preferably, the two loudspeakers and the "radio" are at the vertices of a scalene triangle drawn on the floor. When that proves impractical, a third very small active antenna is deployed to ensure that the triangle has a width of several metres when viewed from any direction, and in particular from the direction of the principal DRM broadcasts, i.e. the direction of path 10 in Figure 4. Further antennas may be connected as available. Further antennas have the advantage that more than one null will exist in the system and therefore the system can adapt more sensitively to the variations in the direction of arrival of the incoming radio signal. The improvement in signal arises mainly from the suppression of unwanted third party noise, for example PLT interference, noise from car ignitions, computers etc. A further improvement can be obtained by suppressing a bad case of multipath using one of the nulls in the antenna system. Increasing the number of antennas in the system also results in the sharpening the angular selectivity of the main null. A double null sharpens the angular selectivity near the minimum of gain therefore enabling a smaller difference in direction of arrival to be resolved.

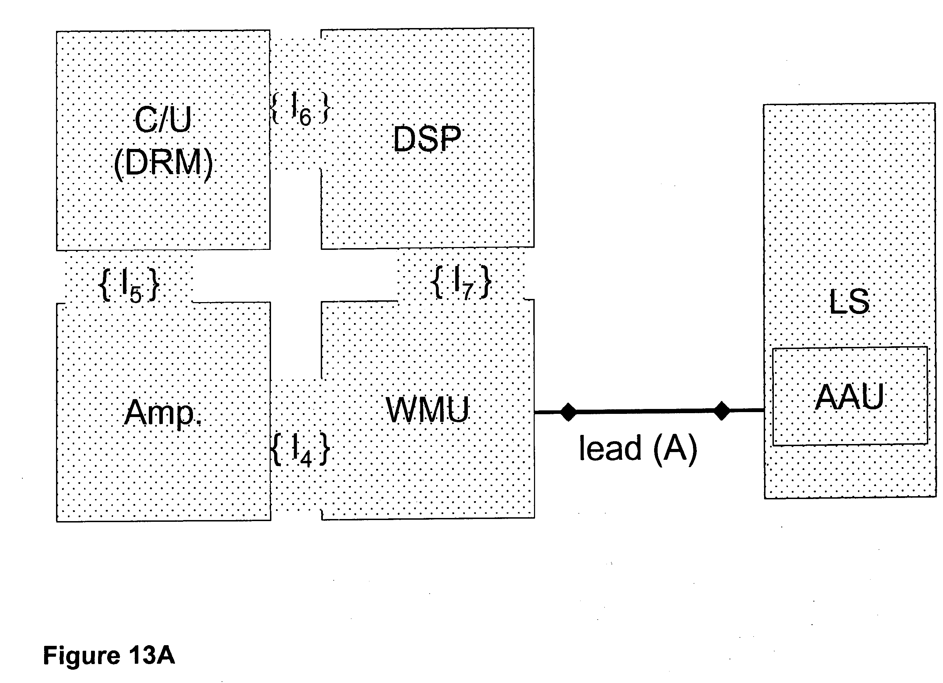

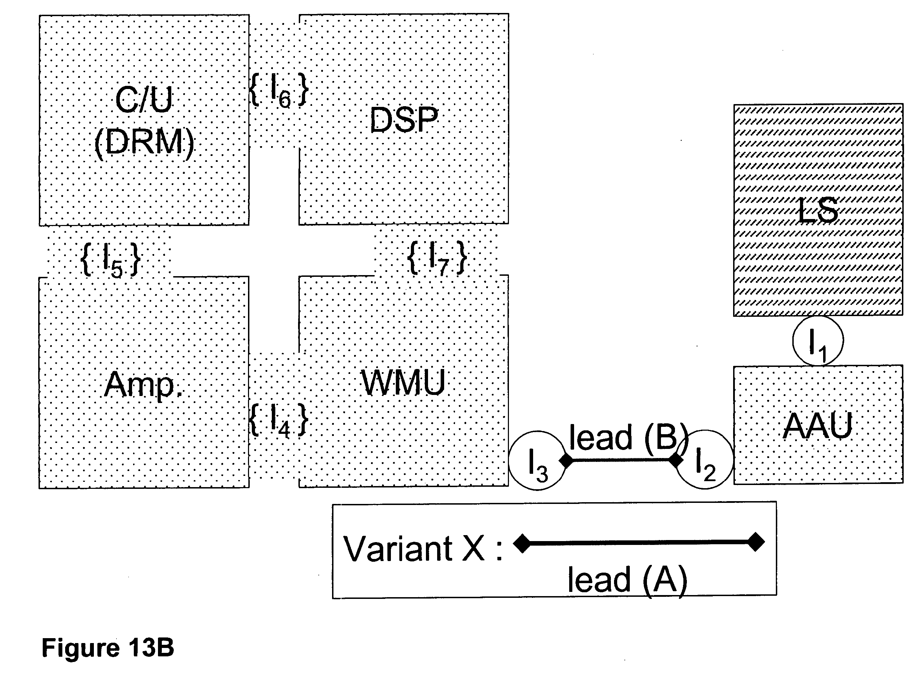

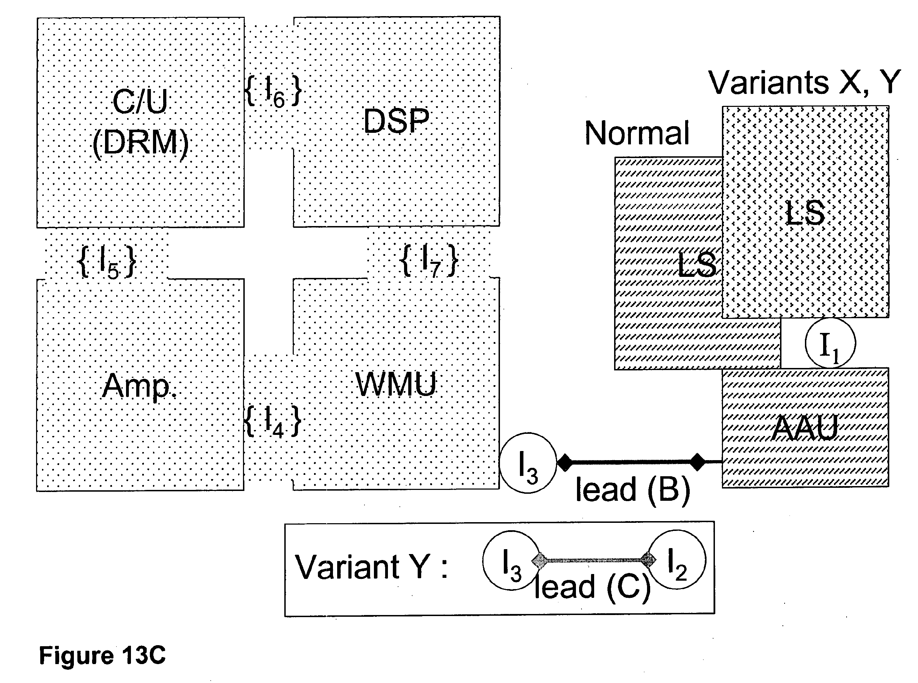

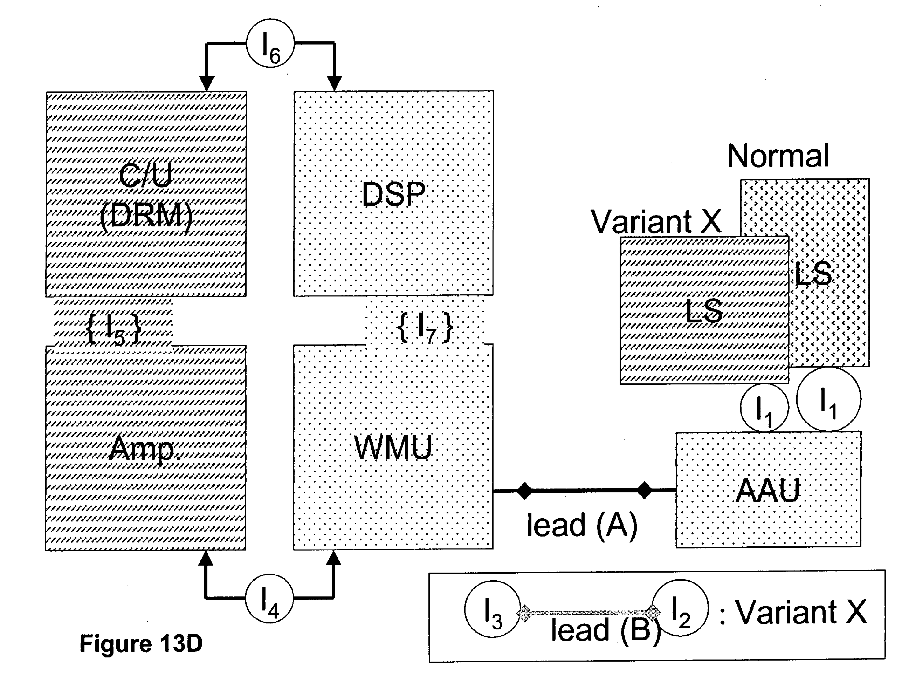

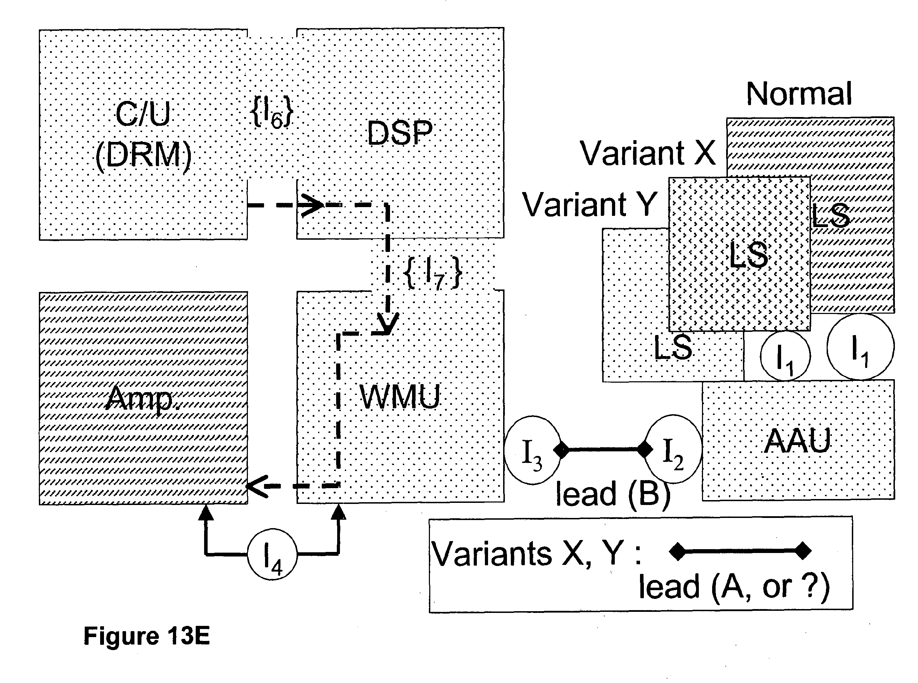

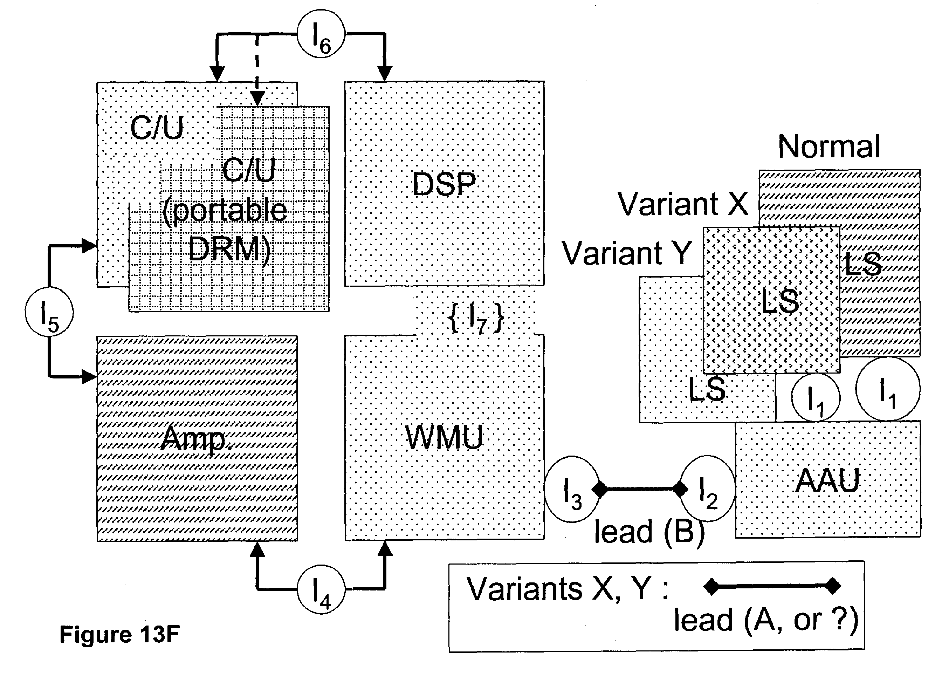

In order to enable the retrofitting of the system of the present invention into existing models the system of the present invention can be packaged into a number of discrete units, namely the Antenna Applique Unit (AAU); Wired Multiplexer Unit (WMU); Digital Signal Processor (DSP) and DRM receiver (DRM) and Loudspeaker (LS). Figures 13A to F show a number of examples of the way in which the elements described below can be combined dependent upon whether or not the various elements are provided by the same or different manufacturers and therefore which of the various required interfaces are public in the sense that they link components provided by different manufacturers and, conversely, which are not public as they link two components provided by the same manufacturer. The four different types of shading indicate the four different possible manufacturers who may be involved in creating any one system. The interfaces, marked l₁ to l₇, are encircled if they are public interfaces and are placed in brackets if they are private. The route of the audio signal in Figure 13E is indicated by the dashed line from the DRM, through the DSP and the WMU and into the amplifier, this routing minimises the number of public interfaces necessary as there is no direct interface between the DRM and the amplifier.

The AAU contains the small, active HF antenna element, radio frequency amplifier, means of extracting direct current from the conventional loudspeakers audio drive cable, and means for returning off-air radio frequency signals to the DRM radio set. The AAU may be external to, or incorporated within the loudspeaker cabinet. In the situation wherein the aim is to retrofit the system the AAU must be manifested as a separate module. In this case the AAU becomes an applique unit, requiring the establishment of electrical/electronic interfaces with the loudspeaker terminals, and mechanical devices for attaching it to the loudspeaker enclosure.

The Wired Multiplexer Unit (WMU) supplies d.c. power to the remote Antenna Applique Unit and retrieves the radio frequency off-air signal from the remote antenna. It allows the normal audio signals to pass through undisturbed. If the entire system is supplied together and the system is already included at point of sale then the WMU may be embedded in, or collocated with the power-amplifier unit. Both the AAU and WMU may be modified continuously as the modules are upgraded, easily maintaining backwards compatibility. In the situation wherein the aim is to retrofit the system the WMU must be a stand alone unit, separate from the audio amplifier. As a result it requires a public interface to divert the audio output through the WMU where electrical power can be transmitted to, and radio frequency signals extracted from the AAU. Furthermore there is a requirement for a complex interface to be created between the pre-existing DRM tuner and the DSP module.

The DSP processor manipulates the null points of the antennas in order to reduce the number of drop-outs. Preferably it is embedded in the larger DRM receiver but alternative configurations could be envisaged whereby the DSP exists as a separate unit.

The loudspeaker is not, of itself, essential to the function of the system of the present invention. However, in order to ensure interoperability with the other elements in the system some consideration must be given to the connections between the loudspeaker and the rest of the system.

An alternative retrofit scenario occurs where the DSP, WMU and DRM core receiver are combined into a self contained unit functioning much as the "FM tuner" component of a typical *hi-fi* set up. In such an instance, the audio amplifier, loudspeakers, etc are customarily installed by the user to his/her own specification.

## Claims

1. A system for improving the consistency of a reception of radio waves, the system comprising:
at least two antennas each having a predetermined spatial response;`
means for receiving incoming electro-magnetic signals from each of the antennas;
means for analysing the incoming signals to ascertain the Doppler spread component of the incoming signal in each direction;
means for.combining the responses from each of the antennas to result in an outgoing signal that appears to come from a single, virtual antenna;
means for detecting the optimal direction of arrival of the signal;
means for modifying the virtual antenna based upon the detected Doppler spread in order to optimise the outgoing signal.

2. The system according to claim 1, wherein the analysis means is an algorithm which is biassed to promote signal arriving on the normal Great Circle bearing.

3. The system according to claim 1 or claim 2, wherein the receiver is a radio frequency receiver for receiving DRM radio signals.

4. The system according to any of the preceding claims, wherein the antennas are embedded in the constituent parts of a system designed to render incoming electromagnetic signals as sound.

5. The system according to any of one of claims 1 to 4, wherein the threshold of acceptable Doppler-spread component in the incoming signal is predetermined.

6. The system according to any one of claims 1 to 4, wherein the threshold of acceptable Doppler-spread component in the incoming signal is capable of dynamic variation.

7. The system according to any of the preceding claims, wherein the antennas form a phased array.
